# EUROPÄISCHE PATENTANMELDUNG

(11) **EP 2 008 756 A1**
(43) Veröffentlichungstag der Anmeldung: **31.12.2008**
(21) Anmeldenummer: 08011275.8
(22) Anmeldetag: 20.06.2008
(51) Int. Cl.: B23K 26/34, B23K 26/14, F01D 5/00, G02B 23/26

(54) **Verfahren und Vorrichtung zur Reparatur von Blisks von Gasturbinen**

(30) Priorität: 27.06.2007 DE 102007029728
(71) Anmelder: Rolls-Royce Deutschland Ltd & Co KG, 15827 Blankenfelde-Mahlow (DE)
(72) Erfinder: Spallek, Martin, 35633 Lahnau (DE); Haubold, Thomas, Dr., 61273 Wehrheim (DE); Zhu, Leping, Dr., 64291 Darmstadt (DE)
(74) Vertreter: Schaeberle, Steffen

(57) **Zusammenfassung**

Die Erfindung bezieht sich auf ein Verfahren und eine Vorrichtung zur Reparatur von Blisks von Gasturbinen, mit einem Endoskop 15 mit einer Beobachtungsoptik, welche mit einer flexiblen Lichtleiteinrichtung 16 versehen ist, mit einer Laserquelle 9, welche mit einer flexiblen Lichtleitfasereinrichtung 10 verbunden ist, mit einem Zusatzmaterialförderer 7 zur Zuführung von Schweißpulver durch eine flexible Leitung 8, mit einer Wasserversorgung 11, welche mit einer flexiblen Leitung 12 verbunden ist, und mit einer Edelgasversorgung 13, welche zur Zufuhr von Edelgas mit einer flexiblen Leitung 16 verbunden ist, wobei die flexiblen Leitungen 8, 12, 14, die flexible Lichtleiteinrichtung 16 und die flexible Lichtfasereinrichtung 10 zumindest an ihren distalen Endbereichen zu einem flexiblen, länglichen Bearbeitungsgerät 17 zusammengefasst sind, sowie mit einem Endoskop und einer mit einem Antrieb versehenen, flexiblen Schleifeinrichtung, welche an ihrem distalen Ende mit einem rotierenden Schleifkörper versehen ist, wobei die Vorrichtung im nicht-demontierten Zustand der Gasturbine verwendet wird.

## Beschreibung

Die Erfindung bezieht sich auf ein Verfahren sowie eine Vorrichtung zur Reparatur von Blisks von Gasturbinen.

Moderne Verdichter verwenden zunehmend die Blisk-Technologie (bladed disk) für optimale Strömungsführung und hohen Verdichterwirkungsgrad bei geringem Gewicht. Bliskbauweise bedeutet, dass im Gegensatz zur konventionellen Schaufel-Scheibe Bauweise, bei der die Schaufeln als Einzelteile mit der Verdichterscheibe verbaut werden, ein Gesamtbauteil vorliegt. Da Verdichterschaufeln Erosion durch Sand und Staub und auch Beschädigungen durch FOD (Foreign Object Damage), also Einschlag von Fremdobjekten wie Steinen, Hagelkörnern, etc. ausgesetzt sind, ist eine Reparaturmöglichkeit für Schaufeln im Verdichterbereich unabdingbar. In der herkömmlichen Schaufel-Scheibe Bauweise geschieht das in der Regel durch Austausch der einzelnen Schaufel, da eine Reparatur der Einzelschaufel im Vergleich zum Neupreis nicht wirtschaftlich ist. Für die Bliskbauweise ist dieser Austausch nicht ohne Weiteres möglich, daher ist die Entwicklung von Reparaturverfahren von besonderem Interesse.

Generell werden als Reparaturverfahren für Blisk der Schaufelaustausch und Wiederanschweißen mittels linearem Reibschweißen erprobt (EP 1 535 692 A1) sowie Wiederherstellen der Schaufelkontur durch Materialauftrag durch WIG Schweißen, Laserauftragschweißen oder andere Schweißverfahren entwickelt (US 5,038,014). Prinzipielle Arbeitschritte beim Aufschweißen sind Ausfräsen der schadhaften Schaufel, Auftragsschweißen, Wärmebehandlung und Fräsen auf Sollmaß.

Weiterhin ist das Ausschneiden von definierten Schaufelbereichen und Einschweißen von "Einsatzstücken" als Reparaturverfahren im Patent US 6,568,077 B1 beschrieben.

Kleinere Beschädigungen können durch mechanische Bearbeitung (Schleifen, Blending) auch soweit ausgearbeitet werden, dass sie für den weiteren Betrieb akzeptabel sind und die ursprüngliche Geometrie nicht wiederhergestellt werden muss.

Nachteil des bekannten Standes der Technik ist, dass die wiederherstellenden Schweißverfahren nur im ausgebauten Zustand möglich sind und somit eine komplette Demontage des Triebwerkes, welche mit erheblichen Demontagekosten und langer Stand- bzw. Ausfallzeit des Fluggerätes verbunden ist, erfordern.

Der Erfindung liegt die Aufgabe zugrunde, ein Verfahren sowie eine Vorrichtung zur Reparatur von Blisks von Gasturbinen zu schaffen, welche bei einfachem Aufbau und einfacher, kostengünstiger Anwendbarkeit die Reparatur von nicht-demontierten Gasturbinen ermöglichen.

Erfindungsgemäß wird die Aufgabe durch die Merkmalskombination der unabhängigen Ansprüche gelöst, die Unteransprüche zeigen weitere vorteilhafte Ausgestaltungen der Erfindung.

Erfindungsgemäß wird somit zunächst eine Vorrichtung geschaffen, welche ein flexibles, längliches Bearbeitungsgerät umfasst, das entweder durch den Fan oder durch Montageöffnungen in den Innenraum der Gasturbine eingeführt werden kann. Hierbei ist es möglich, ohne eine Demontage der Gasturbine unter Beobachtung durch ein Endoskop zunächst fehlerhafte Stellen zu ermitteln, gegebenenfalls zumindest teilweise abzutragen und durch Auftragsschweißen auszubessern. Die Vorrichtung ermöglicht es somit, Reparaturen vor Ort durchzuführen, beispielsweise bei Fluggasturbinen, die an Flugzeugen montiert sind (on-wing).

Hinsichtlich des erfindungsgemäßen Verfahrens wird die Möglichkeit geschaffen, Reparaturen schnell und kostengünstig durchzuführen, ohne dass ein Zerlegen der Gasturbine erforderlich ist. Dies bringt sowohl erhebliche Zeiteinsparungen als auch erhebliche Kosteneinsparungen mit sich.

Diese Erfindung beschreibt ein Verfahren, das einen Materialauftrag und damit eine Wiederherstellung der Geometrie von Schaufelbereichen an Bliskbauteilen ohne Demontage, also on-wing, ermöglicht. Dazu wird eine endoskopische Schweißapparatur eingesetzt.

Diese Apparatur kann folgendermaßen aufgebaut sein:
Analog zum boroskopischen Blending wird neben der Optik zum Befunden und dem Schleifer ein Laserlichtwellenleiter, ein Laserschweißkopf und eine Materialzufuhr - bevorzugt Pulverzufuhr - durch die Wartungsöffnungen des Triebwerkes eingeführt.

Der erfindungsgemäße Reparaturablauf kann folgendermaßen beschrieben werden:
- Einführen des endoskopischen Gerätes (Optik, Schleifer, Laserschweißkopf und Lichtleiter sowie Materialzufuhr),
- Befunden der Beschädigung,
- Ausblenden (Abtragen) der beschädigten Stelle,
- Aufschweißen und Wiederaufbau der beschädigten Stelle,
- mechanische Nacharbeit des aufgeschweißten Materials zur Wiederherstellung der Geometrie der beschädigten Stelle,
- Ausbau des endoskopischen Gerätes.

Dabei ist die so reparierte Beschädigung zumindest so weit wiederhergestellt, dass das Triebwerk bis zum nächsten geplanten Wartungszeitpunkt betrieben werden kann.

Vorteil der erfindungsgemäßen Lösung ist die Möglichkeit, Material auftragende Reparaturen von Beschädigungen bevorzugt im Schaufelbereich von sowohl Flugtriebwerken als auch Industrie-Gasturbinen ohne vorherige Demontage des Gesamttriebwerks - also on-wing bzw. im Einsatzbereich - durchzuführen. Damit werden erhebliche Demontagekosten eingespart und die Durchlaufzeit einer solchen Reparatur signifikant reduziert. Diese Faktoren führen somit zu einer Reduzierung der Stand- bzw. Ausfallzeit des Fluggerätes.

Im Folgenden wird die Erfindung anhand von Ausführungsbeispielen in Verbindung mit der Zeichnung beschrieben. Dabei zeigt:
- Fig. 1: eine vereinfachte perspektivische Darstellung eines Blisk mit Beschädigungen sowie reparierten Passagen,
- Fig. 2 bis Fig. 4: unterschiedliche Anwendungsfälle des erfindungsgemäßen Verfahrens sowie der erfindungsgemäßen Vorrichtung,
- Fig. 5: eine vereinfachte Darstellung eines Ausführungsbeispiels einer erfindungsgemäßen Bearbeitungsapparatur sowie eines zugeordneten Beobachtungsendoskops,
- Fig. 6: eine Darstellung analog Fig. 5, einer Bearbeitungsapparatur mit integriertem Beobachtungsendoskop,
- Fig. 7: eine vergrößerte Schnitt-Darstellung des distalen Endbereichs einer erfindungsgemäßen Vorrichtung, und
- Fig. 8: eine schematische Darstellung des Strahlengangs der Bearbeitungsoptik.

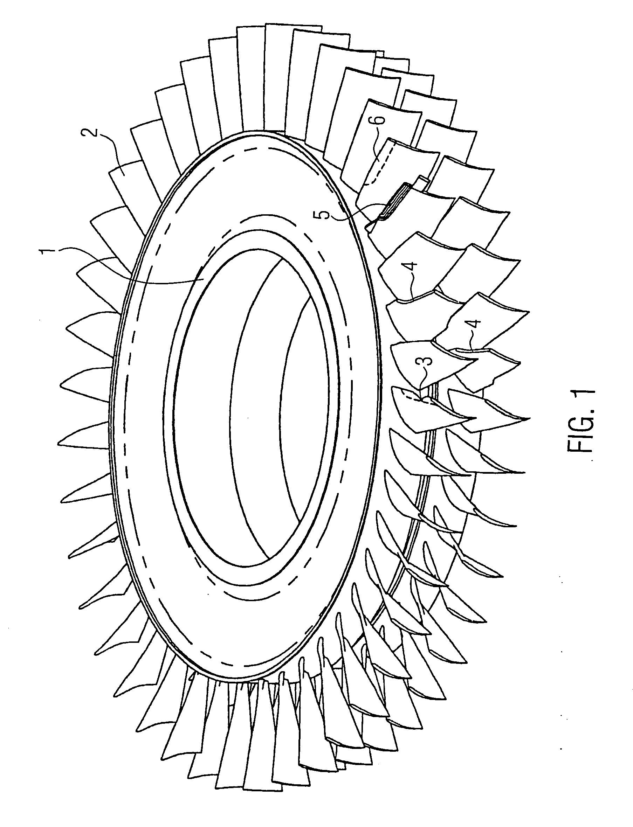

Die Fig. 1 zeigt eine Scheibe 1 einer Gasturbine, welche einstückig mit Schaufeln 2 versehen ist. Hierdurch ist eine Blisk gebildet. Das Bezugszeichen 3 bezeichnet eine beschädigte Stelle einer Schaufel 2 durch ein Fremdobjekt. Mit dem Bezugszeichen 4 ist jeweils ein abgetragener Bereich dargestellt, an welchem die beschädigte Stelle entfernt wurde. Das Bezugszeichen 5 zeigt eine Reparaturstelle, welche durch Auftragschweißen repariert wurde. Das Bezugszeichen 6 zeigt eine fertig reparierte Stelle einer Schaufel 2.

Erfindungsgemäß werden somit beschädigte Stellen 3 ermittelt, durch ein Abtragverfahren, beispielsweise Schleifen, vorbereite (abgetragener Bereich 4) und durch Auftragsschweißen (Reparaturstelle 5) in Stand gesetzt und durch eine gegebenenfalls erforderliche Oberflächenbearbeitung fertiggestellt (Reparaturstelle 6).

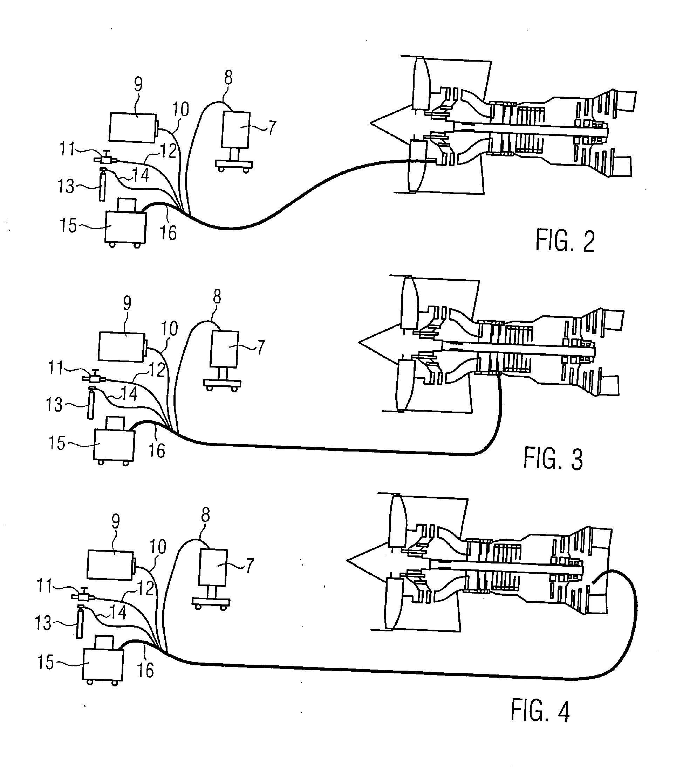

Erfindungsgemäß ist es möglich, die Reparatur im montierten Zustand der Gasturbine (Fluggasturbine) durchzuführen, so wie dies in den Fig. 2 bis 4 schematisch dargestellt ist. Hierbei ist (Fig. 2) die Reparatur so durchgeführt, dass axial von vorn in das Triebwerk das beschädigte Bauteil repariert wird. Alternativ hierzu ist es (Fig. 3) möglich, die Reparatur seitlich durch Bearbeitungsöffnungen vorzunehmen oder (Fig. 4) von hinten zur Bearbeitung in das Triebwerk einzugreifen.

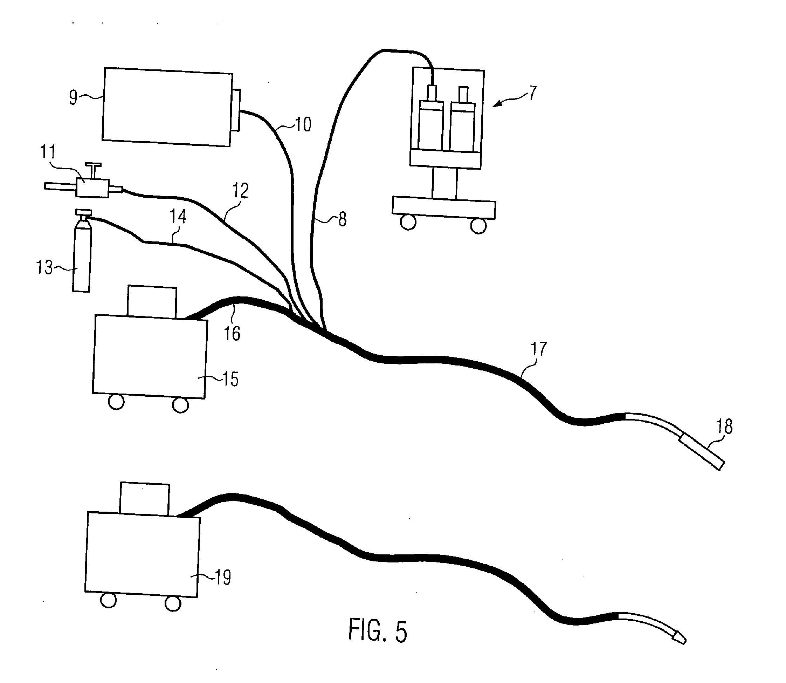

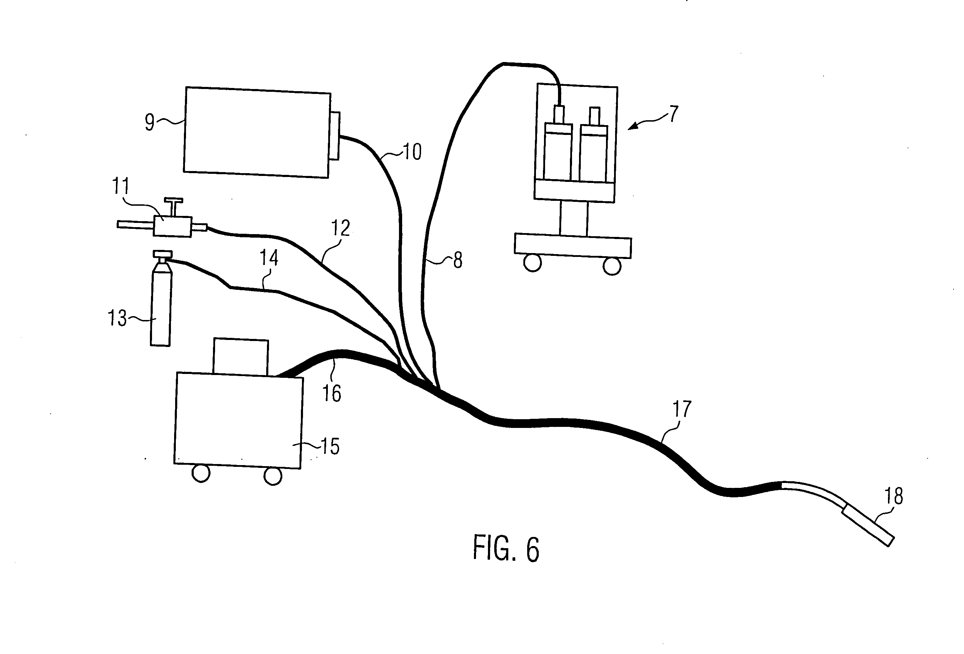

Die Fig. 5 und 6 zeigen in vereinfachter Darstellung den Aufbau der erfindungsgemäßen Vorrichtung. Dabei ist ein Zusatzmaterialförderer (Pulverförderer) 7 vorgesehen, welcher über eine flexible Leitung angeschlossen ist. Eine Laserquelle 9 ist über eine Lichtleitfasereinrichtung (Lichtfaser) verbunden. Eine Wasserversorgung 11 ist über eine flexible Leitung 12 angeschlossen, während eine Edelgasversorgung 13 über eine flexible Leitung 14 angeschlossen ist. Mit dem Bezugszeichen 15 ist ein Endoskop bezeichnet, welches über eine Lichtleiteinrichtung 16 angeschlossen ist.

Die Fig. 5 zeigt ein Endoskop 15 zur Steuerung eines gemeinsamen flexiblen, länglichen Bearbeitungsgeräts 17, welches die flexiblen Leitungen 8, 12, 14, die Lichtfasereinrichtung 10 sowie die Lichtleiteinrichtung 16 gemeinsam umfasst. Das Bearbeitungsgerät 17 trägt an seinem Kopf einen Schweißkopf 18.

In Fig. 5 ist eine Ausgestaltung dargestellt, welche ein separates Endoskop 19 mit einer Bearbeitungsoptik umfasst. Das Endoskop 15 ist für die Steuerung des flexiblen, länglichen Bearbeitungsgeräts 17 (guide tube) ausgebildet.

Bei dem Ausführungsbeispiel der Fig. 6 ist das Endoskop 15 so ausgebildet, dass es sowohl für die Steuerung des Bearbeitungsgerätes 17 als auch für die Beobachtung ausgebildet ist.

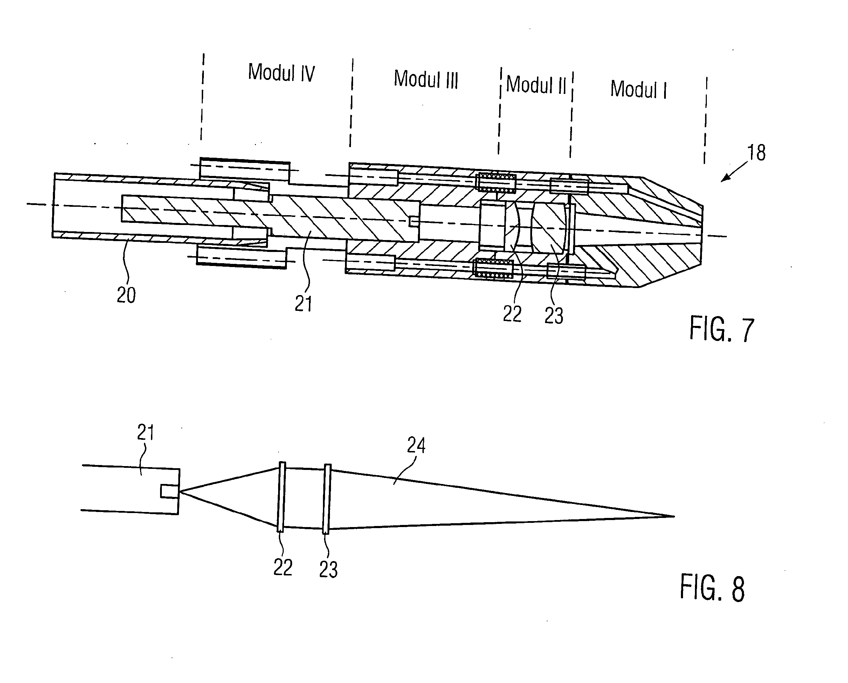

Die Fig. 7 zeigt eine vereinfachte Schnittansicht eines Schweißkopfes 18, welcher aus unterschiedlichen Modulen I bis IV aufgebaut ist. Dabei ist ein Endbereich des Bearbeitungsgerätes 17 (guide tube 20) dargestellt. Das Bezugszeichen 21 zeigt eine Lichtleitfaser, eine Kollimierlinse 22 und eine Fokussierlinse bildend einen Teil des optischen Strahlenganges, so wie dies in schematischer Weise in Fig. 8 gezeigt ist, um eine Laserstrahlung 24 zu fokussieren.

### Bezugszeichenliste

- 1: Scheibe
- 2: Schaufel
- 3: Beschädigte Stelle
- 4: Abgetragener Bereich
- 5: Reparaturstelle
- 6: Reparaturstelle
- 7: Zusatzmaterialförderer/Pulverförderer
- 8: Flexible Leitung
- 9: Laserquelle
- 10: Lichtleitfasereinrichtung
- 11: Wasserversorgung
- 12: Flexible Leitung
- 13: Edelgasversorgung
- 14: Flexible Leitung
- 15: Endoskop
- 16: Lichtleiteinrichtung
- 17: Bearbeitungsgerät
- 18: Schweißkopf
- 19: Endoskop
- 20: guide tube
- 21: Lichtleitfaser
- 22: Kollimierlinse
- 23: Fokussierlinse
- 24: Laserstrahlung

## Patentansprüche

1. Vorrichtung zur Reparatur von Blisks von Gasturbinen,
- mit einem Endoskop (15) mit einer Beobachtungsoptik, welche mit einer flexiblen Lichtleiteinrichtung (16) versehen ist,
- mit einer Laserquelle (9), welche mit einer flexiblen Lichtleitfasereinrichtung (10) verbunden ist,
- mit einem Zusatzmaterialförderer (7) zur Zuführung von Schweißpulver durch eine flexible Leitung (8),
- mit einer Wasserversorgung (11), welche mit einer flexiblen Leitung (12) verbunden ist, und
- mit einer Edelgasversorgung (13), welche zur Zufuhr von Edelgas mit einer flexiblen Leitung (16) verbunden ist,
- wobei die flexiblen Leitungen (8, 12, 14), die flexible Lichtleiteinrichtung (16) und die flexible Lichtfasereinrichtung (10) zumindest an ihren distalen Endbereichen zu einem flexiblen, länglichen Bearbeitungsgerät (17) zusammengefasst sind,
- sowie mit einem Endoskop und einer mit einem Antrieb versehenen, flexiblen Schleifeinrichtung, welche an ihrem distalen Ende mit einem rotierenden Schleifkörper versehen ist.

2. Vorrichtung nach Anspruch 1, **dadurch gekennzeichnet, dass** das flexible, längliche Bearbeitungsgerät (17) eine lenkbare guide tube bildet.

3. Verfahren zur Reparatur von Blisks von Gasturbinen unter Verwendung der Vorrichtung nach Anspruch 1 oder 2, **dadurch gekennzeichnet, dass** das Bearbeitungsgerät (17) im montierten Zustand an die zu reparierende Stelle der Gasturbine geführt wird.

4. Verfahren nach Anspruch 3, **dadurch gekennzeichnet, dass** das Bearbeitungsgerät frontal durch einen Fan einer Fluggasturbine eingeführt wird.

5. Verfahren nach Anspruch 3, **dadurch gekennzeichnet, dass** das Bearbeitungsgerät (17) durch seitliche Öffnungen in den Innenraum einer Gasturbine eingebracht wird.

6. Verfahren nach Anspruch 3, **dadurch gekennzeichnet, dass** das Bearbeitungsgerät (17) durch eine rückwärtige Öffnung in den Innenraum einer Gasturbine eingebracht wird.

7. Verfahren nach einem der Ansprüche 1 bis 6, **dadurch gekennzeichnet, dass** das Bearbeitungsgerät an die beschädigte Stelle geführt wird, dass nachfolgend die Beschädigung befundet wird, dass im nächsten Arbeitsschritt die beschädigte Stelle ausgeblendet wird, dass im nachfolgenden Arbeitsschritt die beschädigte Stelle durch Auftragsschweißen repariert wird und dass als nächster Arbeitsschritt eine mechanische Nachbearbeitung des aufgetragenen Materials zur Wiederherstellung der Geometrie der beschädigten Stelle erfolgt.

8. Verfahren nach einem der Ansprüche 3 bis 7, **dadurch gekennzeichnet, dass** sämtliche Arbeitsschritte im nicht-demontierten Zustand der Gasturbine durchgeführt werden.
